# DEMANDE DE BREVET EUROPEEN

(11) **EP 4 588 578 A2**
(43) Date de publication de la demande: **23.07.2025**
(21) Numéro de dépôt: 24217170.0
(22) Date de dépôt: 03.12.2024
(51) Int. Cl.: B07B 4/02, B07B 4/06, B07B 4/08, B07B 11/02, B07B 13/00

(54) **INSTALLATION PERMETTANT LA SÉPARATION DES COMPOSANTS D'UN MÉLANGE DE FIBRES ET DE GRANULES AU MOYEN D'UN SYSTÈME AÉRAULIQUE COMPRENANT UNE BUSE D' ASPIRATION COMBINÉE À UNE GRILLE RÉCEPTRICE MOBILE**

(30) Priorité: 26.12.2023 FR 2315278
(71) Demandeur: COMPAGNIE GENERALE DES ETABLISSEMENTS MICHELIN, 63000 Clermont-Ferrand (FR)
(72) Inventeur: MOSNIER, Thomas, 63040 CLERMONT-FERRAND (FR); SIMONELLI, Thomas, 63040 CLERMONT-FERRAND CEDEX 9 (FR)
(74) Mandataire: M.F.P. Michelin

(57) **Abrégé**

La présente invention concerne une installation (100) de séparation pour traiter un mélange (1) de fibres (2) et de granules (3), ladite installation comprenant un dispositif d'émiettement (101) pour générer un écoulement pulvérulent du mélange, puis un système aéraulique comprenant une grille réceptrice (10) mobile, formant un tambour (40) rotatif, et associée à une buse d'aspiration (14) conçue pour générer, à travers la grille réceptrice (10), un flux d'aspiration (F14) qui est transverse à la direction principale d'écoulement (Z1) du mélange (1), de sorte que ledit flux d'aspiration (F14) permet de prélever des fibres (2) dans l'écoulement (F1) du mélange, en déviant la trajectoire desdites fibres (2) par rapport à la direction principale d'écoulement (Z1) du mélange, et de plaquer lesdites fibres (2) contre la face externe (10A) de la grille réceptrice (10).

## Description

La présente invention concerne le domaine général des installations et des procédés de séparation destinés à séparer les différents composants d'un mélange contenant des fibres et des granules, notamment en vue du recyclage des matériaux qui sont respectivement constitutifs de ces différents composants.

L'invention trouve plus particulièrement application dans le traitement de mélanges qui sont issus du broyage de bandages pneumatiques et qui contiennent des fibres textiles, notamment en polyéthylène téréphtalate, et des granules en matériau à base de caoutchouc.

On connaît déjà des procédés de séparation selon lesquels on confère aux composants du mélange, par exemple par tribochargement, des charges électrostatiques dont le signe est différent selon qu'il s'agit d'une fibre ou d'un granule, puis l'on sépare les fibres des granules en faisant passer le mélange ainsi chargé dans un champ électrique formé entre deux électrodes, qui attirent chacune sélectivement un type de composant en fonction de la polarité dudit composant.

Toutefois, il est parfois difficile de traiter efficacement par les procédés connus de grandes quantités de mélange dans un temps limité.

Les objets assignés à l'invention visent par conséquent à proposer une nouvelle installation qui permette de mettre en oeuvre, au moyen d'une structure simple et peu gourmande en énergie, un nouveau procédé de séparation qui présente un rendement amélioré.

Les objets assignés à l'invention sont atteints au moyen d'une installation de séparation destinée à traiter un mélange de composants comprenant une première famille de composants formés par des fibres et une seconde famille de composants formés par des granules, ladite installation étant caractérisée en ce qu'elle comprend :
- un dispositif d'émiettement conçu pour fractionner le mélange et générer un écoulement dudit mélange, sous une forme pulvérulente contenant des fibres et des granules, selon une direction dite « direction principale d'écoulement »,
- ainsi qu'une grille dite « grille réceptrice », qui présente une première face dite « face externe » et une seconde face opposée, dite « face interne », laquelle grille réceptrice est agencée pour être entraînée en déplacement selon un mouvement dit « mouvement de convoyage » qui permet à ladite grille réceptrice de passer d'un premier poste, dit « poste de tri », au niveau duquel la face externe de la grille réceptrice se situe en vis-à-vis de l'écoulement du mélange afin de capter des fibres en provenance de l'écoulement du mélange, à un second poste dit « poste d'évacuation », qui est distant du poste de tri, et au niveau duquel les fibres sont détachées de ladite face externe de la grille réceptrice pour pouvoir rejoindre un premier collecteur,
le poste de tri étant pourvu d'une buse d'aspiration qui est située en vis-à-vis de la face interne de la grille réceptrice et qui est conçue pour générer, à travers la grille réceptrice, un flux d'aspiration qui est transverse à la direction principale d'écoulement du mélange, de sorte que ledit flux d'aspiration permet de prélever des fibres dans l'écoulement du mélange, en déviant la trajectoire desdites fibres par rapport à la direction principale d'écoulement du mélange, et de plaquer lesdites fibres contre la face externe de la grille réceptrice.

Avantageusement, l'installation selon l'invention permet de trier les composants du mélange en fonction de leur poids, de leur taille et de la force de traînée qu'ils subissent chacun lorsque lesdits composants se retrouvent exposés au flux d'aspiration. La sélectivité du procédé permet notamment de collecter séparément d'une part les fibres qui sont aspirées et plaquées contre la grille, à destination du premier collecteur, d'autre part des granules fins qui sont suffisamment légers pour être entraînés par le flux d'aspiration et qui présentent une taille suffisamment petite pour traverser la grille réceptrice qui retient les fibres et être aspirés par la buse d'aspiration à destination d'un second collecteur, et enfin des granules grossiers qui sont trop gros et trop lourds pour être entraînés par le flux d'aspiration et qui poursuivent donc leur chemin selon la direction principale d'écoulement pour rejoindre, de préférence par chute gravitaire, un troisième collecteur.

Avantageusement, l'invention permet en outre de générer, de préférence sous forme d'une pluie verticale, un écoulement du mélange qui est relativement dense, et donc riche en fibres et en granules pour une surface donnée, mais également bien réparti sur une surface assez large, correspondant à la largeur dudit écoulement du mélange, de sorte que, en utilisant une grille réceptrice qui couvre ladite largeur de l'écoulement du mélange, transversalement à la direction principale d'écoulement, et qui voit donc défiler devant elle une quantité élevée de mélange par unité de temps, on parvient à trier rapidement des quantité importantes de fibres d'une part, de granules d'autre part, ce qui confère à l'installation un rendement élevé.

Par ailleurs, la grille réceptrice mobile, qui se déplace en circuit fermé, par exemple sous forme d'une bande transporteuse ou d'un tamis cylindrique comme on le verra plus bas, est avantageusement régénérée en permanence du fait qu'elle quitte le poste de tri au fur et à mesure qu'elle se couvre et se charge de fibres, et qu'elle est ensuite nettoyée et débarrassée desdites fibres au poste d'évacuation, et revient ainsi au poste de tri propre et prête à capter de nouvelles fibres, de sorte qu'il n'y a pas de risque que survienne un colmatage de ladite grille qui causerait une perte d'aspiration et donc une perte d'efficacité de l'installation.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

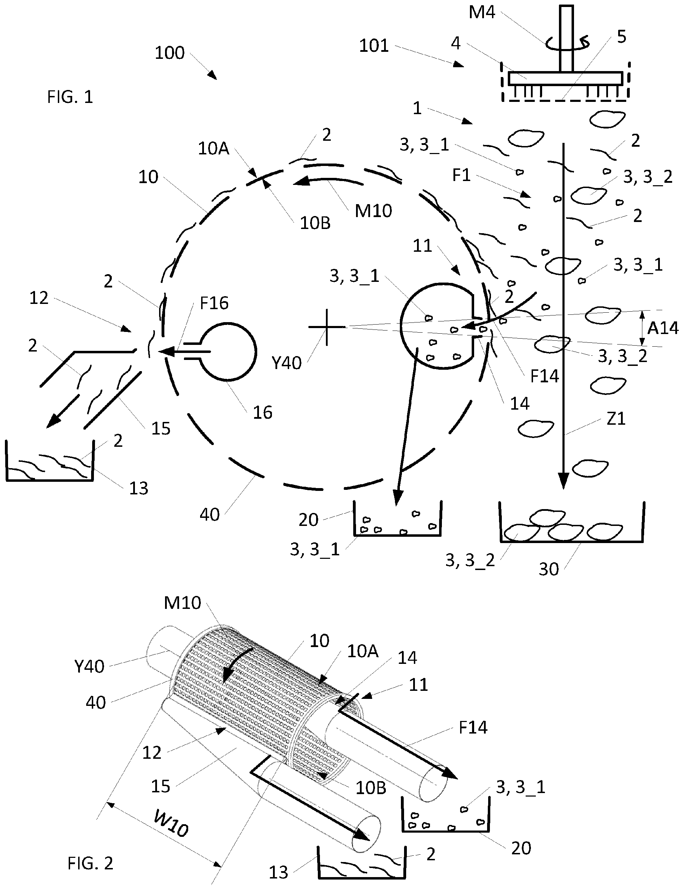

La figure 1 illustre, selon une vue schématique en coupe dans un plan vertical, le principe de fonctionnement d'un exemple d'installation selon l'invention, où la grille réceptrice prend la forme d'un tambour rotatif à l'intérieur duquel est logée la buse d'aspiration. A l'intérieur du tambour se trouve ici également une buse de soufflage qui, au poste d'évacuation, favorise le décollement des fibres.

La figure 2 est une vue en perspective d'un exemple de réalisation d'un système aéraulique pouvant équiper l'installation de la figure 1, ledit système aéraulique comprenant une grille réceptrice agencée sous forme d'un tambour rotatif, une buse d'aspiration logée à l'intérieur dudit tambour, en vis-à-vis de la face interne de la grille réceptrice, au niveau du poste de tri, et un aspirateur situé en vis-à-vis de la face externe du tambour, au niveau du poste d'évacuation, pour prélever les fibres captées par la grille réceptrice et les acheminer vers le premier collecteur.

La présente invention concerne une installation 100 de séparation destinée à traiter un mélange 1 de composants 2, 3 comprenant une première famille de composants 2 formés par des fibres 2 et une seconde famille de composants 3 formés par des granules 3.

Le mélange 1 proviendra de préférence du broyage d'un objet, tel qu'un bandage pneumatique, en vue du recyclage des matériaux constitutifs des fibres 2 et respectivement des granules 3.

Les fibres 2 présenteront une forme mince et allongée, de préférence sensiblement cylindrique.

Au moins une partie, de préférence la majorité desdites fibres 2 présentes dans le mélange 1 (c'est-à-dire plus de 50% du nombre total des fibres présentes), et plus préférentiellement la totalité (100% du nombre total des fibres présentes) desdites fibres 2 qui sont présentes dans le mélange 1 possèderont une longueur comprise entre 1 mm et 10 mm, tandis que la plus grande de leurs dimensions transverses, c'est-à-dire la plus grande des dimensions considérées perpendiculairement à leur longueur, c'est-à-dire typiquement le diamètre dans le cas d'une fibre de forme cylindrique, sera comprise entre 10 µm et 1 mm, et plus typiquement entre 10 µm et 500 µm.

Le procédé selon l'invention, et l'installation 100 correspondante, seront de préférence conçus pour pouvoir séparer et récupérer (au moins) des fibres de telles dimensions.

Plus préférentiellement, les fibres 2 présenteront une dimension, dite longueur, qui est nettement supérieure aux deux autres dimensions, dites dimensions transverses, et plus particulièrement présenteront une longueur au moins 5 fois, de préférence au moins 10 fois, au moins 20 fois, voire au moins 50 fois ou même 100 fois supérieure à la plus grande de ces deux dimensions transverses, c'est-à-dire, typiquement, dans le cas d'une fibre 2 de forme cylindrique, une longueur au moins 5 fois, de préférence au moins 10 fois, au moins 20 fois, voire au moins 50 fois ou même 100 fois supérieure au diamètre de la fibre 2 concernée.

Les fibres 2 pourront être réalisées dans un matériau textile naturel ou synthétique, et plus préférentiellement dans un polymère ou une combinaison de polymères parmi (liste non exhaustive) : le polyéthylène téréphtalate (PET), le polyéthylène (PE), le polypropylène (PP), le polychlorure de vinyle (PVC), le polystyrène (PS), et le nylon (PA).

Les granules seront de préférence formés dans un matériau élastomère, plus préférentiellement à base de caoutchouc.

Par ailleurs, au moins une partie des granules 3 présents dans le mélange 1, de préférence la majorité des granules 3 présents dans le mélange 1 (plus de 50% du nombre total des granules présents), et plus préférentiellement la totalité (100% du nombre total des granules présents) desdits granules 3 présents dans le mélange 1 présenteront de préférence un diamètre équivalent compris entre 125 µm et 5 mm, et un facteur de forme compris entre 1 et 2.

Par « diamètre équivalent », on désigne le diamètre que posséderait une sphère fictive qui occuperait le même volume que le volume occupé par le granule 3 considéré.

Par « facteur de forme », on désigne le rapport entre d'une part le diamètre de Féret maximum, c'est-à-dire la distance maximale, observable pour le granule 3 considéré, entre deux droites qui sont parallèles entre elles et tangentes respectivement à des côtés opposés d'une projection plane dudit granule 3 considéré, et d'autre part le diamètre de Féret minimum, c'est-à-dire la distance minimale, observable pour le granule 3 considéré, entre deux droites qui sont parallèles entre elles et tangentes respectivement à des côtés opposés de ladite projection plane dudit granule considéré. Ce facteur de forme permet de donner une bonne indication de l'élancement des granules 3. A titre indicatif, il est rappelé qu'une sphère possède un facteur de forme égal à 1, et qu'un cube possède un facteur de forme égal à la racine carrée de 2.

Selon l'invention, l'installation 100 comprend un dispositif d'émiettement 101 conçu pour fractionner le mélange 1 et générer un écoulement F1 dudit mélange, sous une forme pulvérulente contenant des fibres 2 et des granules 3, selon une direction dite « direction principale d'écoulement » Z1.

Le dispositif d' émiettement 101 permet de fractionner le mélange 1, et en particulier de désagréger les agglomérats de fibres 2 et de granules 3 qui, au sein du mélange 1 initial, maintiennent des granules 3 prisonniers de masses de fibres 2 enchevêtrées.

L'action du dispositif d'émiettement permet de désenchevêtrer et dissocier tout ou parties des fibres 2 les unes des autres, et de dissocier tout ou partie des granules 3 des fibres 2 environnantes, et ainsi, en émiettant le mélange 1, de générer un écoulement F1 de mélange 1 placé dans un état pulvérulent, selon lequel ledit mélange 1 qui s'écoule contient des fibres 2 qui sont dissociées les unes des autres, et des granules 3 qui sont dissociés les uns des autres et dissociés des fibres 2.

De façon préférentielle, le dispositif d'émiettement 101 est agencé pour générer un écoulement de mélange vertical descendant, sous forme d'une pluie de fibres 2 et de granules 3 qui tombe par gravité, tel que cela est représenté sur la figure 1.

Une telle solution est particulièrement simple à mettre en oeuvre, peu gourmande en énergie, et permet de limiter l'encombrement au sol de l'installation.

De préférence, le dispositif d'émiettement 101 pourra comprendre, tel que cela est schématisé sur la figure 1, une brosse 4 et un tamis 5, dit « tamis d'émiettement » 5, qui sont en mouvement relatif dit « mouvement de brossage » M4 l'un par rapport à l'autre, de sorte que la brosse 4 frotte le mélange 1 à l'encontre du tamis d'émiettement 5 pour désenchevêtrer les fibres 2 et dissocier les uns des autres les composants 2, 3 du mélange, et générer ainsi, à travers le tamis d'émiettement 5, une pluie de fibres 2 et de granules 3 dissociés.
La brosse 4 et/ou le tamis 5 peuvent être électriquement couplés à une référence équipotentielle telle que la terre, permettant d'éviter un éventuel tribochargement.

Ici encore, cette solution est particulièrement simple et permet d'obtenir, par l'effet mécanique de brossage, une dissociation efficace des composants 2, 3 du mélange 1, et en particulier un désenchevêtrement des agrégats de fibres 2.

Le mélange 1 et l'action de brossage sont avantageusement répartis sur une superficie importante de tamis 5, et permettent ainsi de générer un débit élevé d'écoulement F1, ici de pluie, de fibres 2 et de granule 3.

L'écoulement F1 obtenu, ici sous forme de pluie, est avantageusement à la fois dense, c'est-à-dire comportant un nombre élevé de composants 2, 3 par volume d'air, et fin, c'est-à-dire composée de fibres 2 et de granules 3 qui sont finement dissociés les uns des autres, et plus préférentiellement individualisés.

Selon l'invention, l'installation comprend également une grille 10 dite « grille réceptrice » 10, qui présente une première face 10A dite « face externe » 10A et une seconde face 10B opposée, dite « face interne » 10B.

Ladite grille réceptrice 10 est agencée pour être entraînée en déplacement selon un mouvement dit « mouvement de convoyage » M10 qui permet à ladite grille réceptrice 10 de passer d'un premier poste 11, dit « poste de tri » 11, au niveau duquel la face externe 10A de la grille réceptrice 10 se situe en vis-à-vis de l'écoulement F1 du mélange afin de capter des fibres 2 en provenance de l'écoulement F1 du mélange, tel que cela est visible sur la partie droite de la figure 1, à un second poste 12 dit « poste d'évacuation » 12, qui est distant du poste de tri 11, et au niveau duquel les fibres 2 sont détachées de ladite face externe 10A de la grille réceptrice 10 pour pouvoir rejoindre un premier collecteur 13, comme cela est visible sur la partie gauche de la figure 1.

Selon l'invention, le poste de tri 11 est pourvu d'une buse d'aspiration 14 qui est située en vis-à-vis de la face interne 10B de la grille réceptrice 10 et qui est conçue pour générer, à travers la grille réceptrice 10, un flux d'aspiration F14 qui est transverse à la direction principale d'écoulement Z1 du mélange 1, de sorte que ledit flux d'aspiration F14 permet de prélever des fibres 2 dans l'écoulement F1 du mélange, en déviant la trajectoire desdites fibres 2 par rapport à la direction principale d'écoulement Z1 du mélange, et de plaquer lesdites fibres 2 contre la face externe 10A de la grille réceptrice 10.

Les fibres 2 étant légères et présentant une traînée aérodynamique importante, elles sont facilement entraînées parle flux d'aspiration F14, et ce de manière sélective notamment par rapport à des composants plus lourds du mélange, tels que certains granules 3, dits « granules grossiers 3_2.

Les fibres 2 ainsi entraînées par le flux d'aspiration F14 sont ensuite arrêtées par la grille réceptrice 10, et donc récoltées par ladite grille réceptrice 10.

On notera que la grille réceptrice 10 se situe avantageusement hors de l'écoulement F1 du mélange, en vis-à-vis d'un bord dudit écoulement F1, de sorte que, en l'absence de flux d'aspiration F14, les fibres 2 et les granules 3 qui forment l'écoulement F1, et qui suivent la direction principale d'écoulement Z1, n'atteignent pas la grille réceptrice 10, et en particulier, dans le cas d'un écoulement F1 vertical, ne se déversent pas sur la grille réceptrice 10.

Ainsi, on préservera la sélectivité du poste de tri 11 et plus particulièrement de la grille réceptrice 10, qui capteront sélectivement certains des composants 2, 3 du mélange 1, en les déviant de la direction principale d'écoulement Z1, tout en laissant d'autres composants du mélange 1 continuer leur trajectoire selon ladite direction principale d'écoulement Z1.

De préférence, le décalage entre la grille réceptrice 10 et l'écoulement F1 est tel que, en projection dans un plan de référence normal à la direction principale d'écoulement Z1, et notamment dans un plan de référence normal à la direction principale d'écoulement Z 1 et passant par l'ouverture de la buse d'aspiration 14, la surface projetée du volume occupé par la grille réceptrice 10 chevauche moins de 10%, moins de 5%, de préférence moins de 2% de la superficie de la section transverse de l'écoulement F1 considérée dans ledit plan de référence en l'absence de flux d'aspiration F14, voire encore plus préférentiellement ne présente pas d'intersection avec ladite section transverse de l'écoulement F1.

Ainsi, sur la figure 1, la grille réceptrice 10 est décalée latéralement par rapport à l'écoulement F1 vertical de mélange 1, de sorte que dans un plan de référence horizontal situé à l'altitude de l'ouverture de la buse d'aspiration 14, la superficie hors-tout occupée par la grille réceptrice 10 en projection orthogonale dans ledit plan horizontal se situe majoritairement, et de préférence totalement, hors de la section transverse que présente l'écoulement F1 vertical dans ledit plan de référence horizontal, en l'absence de flux d'aspiration F14.

De manière préférentielle, quelle que soit par ailleurs l'orientation de la direction principale d'écoulement Z1, le décalage entre la grille réceptrice 10 et l'écoulement F1 est tel que, en l'absence de flux d'aspiration F14, la grille réceptrice 10 reçoit moins de 10%, moins de 5%, moins de 2%, moins de 0,5%, voire de préférence 0% en poids du débit massique de mélange 1 qui forme l'écoulement F1.

Au niveau du poste de tri 11, la face externe 10A sera plus proche que la face interne 10B de l'écoulement F1, ici d'un bord de l'écoulement, et, plus préférentiellement, ladite face externe 10A pourra être sensiblement tangente au bord de l'écoulement F1 de mélange, en l'absence de flux d'aspiration F14.

Bien entendu, la grille réceptrice 10 sera dimensionnée en fonction du ou des mélanges 1 que l'installation 100 sera amenée à traiter.

A titre indicatif, la taille des mailles de la grille réceptrice 10 pourra être comprise entre 50 µm (soient 0,05 mm) et 1 mm.

L'épaisseur de la grille réceptrice 10, qui sépare la face externe 10A de la face interne 10B, et que traversent les orifices de passage formant les mailles de la grille réceptrice 10, sera choisie de manière à ne pas occasionner trop de pertes de charges dans le flux d'aspiration F14.

A titre indicatif, l'épaisseur de la grille réceptrice 10 pourra être comprise entre 0,05 mm et 1 mm, et peut plus généralement être choisie en fonction du diamètre des fibres 2.

Le mouvement de convoyage M10 permet avantageusement à la grille réceptrice 10 de transporter les fibres 2 recueillies au poste de tri 11 et d'éloigner lesdites fibres 2 de l'écoulement F1 jusqu'au poste d'évacuation 12 où les fibres 2 sont déchargées de la grille réceptrice 10, par exemple au moyen de râcles et/ou d'un aspirateur 15, et/ou d'une brosse contrarotative.

Ce faisant, le mouvement de convoyage M10 renouvelle avantageusement en permanence la portion de la grille réceptrice 10, et plus particulièrement de la face externe 10A, qui, revenue du poste d'évacuation 12 propre et débarrassée de ses fibres 2, se présente au poste de tri 11, en vis-à-vis de l'écoulement F1 de mélange, où la face externe 10A peut alors se couvrir de nouveaux de fibres 2 tout en poursuivant son mouvement de convoyage pour amener lesdites fibres 2 au poste d'évacuation 12, et ainsi de suite.

Selon une possibilité de mise en oeuvre, le poste d'évacuation 12 comprend une buse de soufflage 16, placée en vis-à-vis de la face interne 10B de la grille réceptrice 10, et agencée pour créer un flux de soufflage F16 qui traverse la grille réceptrice 10, depuis la face interne 10B jusqu'à la face externe 10A, afin de détacher et chasser les fibres 2 accumulées sur la face externe 10A, comme cela est visible sur la partie gauche de la figure 1.

Ce flux de soufflage F16 facilite le travail des râcles et/ou de l'aspirateur 15, notamment en chassant et soufflant les fibres 2 présentes à la surface externe 10A de la grille réceptrice, en direction ici de l'orifice d'aspiration de l'aspirateur 15.

On évite ainsi avantageusement tout colmatage de la grille réceptrice 10, qui retourne au poste de tri 11 propre et prête à recevoir de nouvelles fibres 2.

Bien entendu, le poste de tri 11 et le poste d'évacuation, et plus particulièrement la buse d'aspiration 14 d'une part, et l'aspirateur 15 et/ou la buse de soufflage 16 seront disposés de sorte que le flux d'aspiration F14 servant à capter les fibres 2 n'interfère pas avec le flux de soufflage F16 destiné à chasser les fibres 2, et réciproquement.

On notera que le procédé selon l'invention est avantageusement un procédé par voie sèche, qui n'utilise ni liquide, ni en particulier solvant, et qui fait appel à des flux de gaz, de préférence des flux d'air, pour le flux d'aspiration F14, et le cas échéant pour le flux de soufflage F16.

La buse d'aspiration 14, la buse de soufflage 16, et/ou l'aspirateur 15, pourront être formées par des tubulures, droites ou tronconiques, centrées sur des axes rectilignes, et qui présentent chacune une fente allongée, de préférence rectiligne, plus préférentiellement parallèle à l'axe central de la tubulure considérée.

La fente de la buse d'aspiration 14 couvre de préférence plus de 50%, plus de 75%, voire plus de 90%, voire 100% de la largeur W10 de la grille réceptrice 10, considérée transversalement au mouvement de convoyage M10.

De préférence, la largeur W10 de la grille réceptrice 10 couvrira au moins la totalité de la largeur de l'écoulement F1, considérée perpendiculairement à la direction principale d'écoulement Z1, ici donc au moins la totalité de la largeur horizontale de l'écoulement F1 si celui-ci est vertical, et la fente formant l'orifice d'admission de la buse d'aspiration 14 s'étendra, de préférence horizontalement, de sorte à couvrir au moins 50%, de préférence au moins 75%, voire de préférence la totalité de la largeur de l'écoulement F1, ici de la largeur horizontale de l'écoulement F1.

De préférence, la grille réceptrice 10 et la buse d'aspiration 14 du poste de tri 11 sont agencées de sorte que le flux d'aspiration F14 puisse également prélever dans l'écoulement F1 du mélange, en même temps que les fibres 2, certains granules 3, dits « granules fins » 3_1, entraîner lesdits granules fins 3_1 jusqu'à la grille réceptrice 10, puis faire passer lesdits granules fins 3_1 à travers la grille réceptrice 10 tandis que ladite grille réceptrice 10 retient les fibres 2 sur sa face externe 10A, et évacuer lesdits granules fins vers un second collecteur 20.

Avantageusement, le flux d'aspiration F14 sera suffisamment puissant pour capter dans l'écoulement de mélange 1 un sous-mélange formé de fibres 2 et de granules fins 3_1 suffisamment légers pour être entraînés par le flux d'aspiration F14 jusqu'à la grille réceptrice 10.

Typiquement, les granules fins 3_1 formeront de la poussière de caoutchouc.

La taille, et notamment le plus grand diamètre de Féret, des granules fins 3_1 sera suffisamment petite pour que lesdits granules fins 3_1 puissent passer à travers la maille de la grille réceptrice 10, sans obstruer la grille réceptrice 10.

Le poste de tri sera donc à même de trier les composants de ce sous-mélange en séparant les fibres 2 d'une part, qui sont sélectivement retenues par la grille réceptrice 10 et acheminées jusqu'au premier collecteur 13 via le poste d'évacuation 12, des granules fins 3_1 d'autre part, qui sont aspirés par la buse d'aspiration 14 à travers la grille réceptrice 10 pour être acheminés vers le second collecteur 20.

Un troisième collecteur 30 pourra être prévu pour récolter les composants du mélange 1 qui n'auront pas été captés par le flux d'aspiration F14 du poste de tri 11, et en particulier les granules 3 dits « granules grossiers » 3_2 qui sont trop lourds pour être entraînés par le flux d'aspiration F14 et trop gros pour passer à travers la grille réceptrice 10, et qui auront donc poursuivi leur trajectoire, et dépassé le poste de tri 11, selon la direction principale d'écoulement Z1.

De préférence, le dispositif d'émiettement 101 étant agencé pour générer un écoulement F1 de mélange vertical descendant, sous forme d'une pluie de fibres 2 et de granules 3 qui tombe par gravité, le poste de tri 11 se situe à une altitude inférieure à celle du dispositif d'émiettement 101, et présente la face externe 10A de la grille réceptrice 10 au bord de l'écoulement, de façon sensiblement tangente à la direction principale d'écoulement Z1 du mélange.

De préférence, l'installation 100 comprend alors un troisième collecteur 30 qui est situé à l'aplomb vertical de l'écoulement F1 du matériau, à une altitude inférieure à celle du poste de tri 11, de sorte à pouvoir collecter notamment les granules, dits « granules grossiers » 3_2, qui ne sont pas captés par le flux d'aspiration F14 au niveau du poste de tri 11.

Ainsi, l'installation 100 présente une structure simple, peu encombrante au sol, et un fonctionnement économe en énergie, et permet de trier sélectivement les fibres 2, captées par le flux d'aspiration F14, arrêtées par la grille réceptrice 10 et évacuées vers le premier collecteur 13, les granules fins 3_1, captés par le flux d'aspiration F14, aspirés par la buse d'aspiration 14 et évacués vers le second collecteur 20, et les granules grossiers 3_2, qui échappent au poste de tri 11 et continuent leur chute pour atteindre troisième collecteur 30.

La grille réceptrice 10 pourra prendre différentes formes sans sortir du cadre de l'invention.

Ainsi, par exemple, la grille réceptrice 10 pourrait prendre la forme d'une bande convoyeuse, par exemple entraînée et guidée par des rouleaux qui coopèrent avec la face interne 10B de la grille réceptrice 10, ladite bande convoyeuse formant un circuit fermé, dont un premier tronçon passe au poste de tri 11, un second tronçon passe au poste d'évacuation 12, un troisième tronçon, de préférence un tronçon supérieur, relie le premier tronçon au second tronçon afin d'acheminer jusqu'au poste d'évacuation 12 les fibres 2 capturées par le poste de tri 11, et un quatrième tronçon, de préférence un tronçon inférieur, relie le second tronçon au premier tronçon pour assurer le retour de la bande convoyeuse, débarrassée de ses fibres 2, du poste d'évacuation 12 jusqu'au poste de tri 11.

Toutefois, selon une possibilité particulièrement préférée de mise en oeuvre, la grille réceptrice 10 forme, tel que cela est illustré sur les figures 1 et 2, la paroi latérale d'un tambour cylindrique 40, ici de base circulaire, qui est monté en rotation autour de son axe central Y40, et la buse d'aspiration 14 est logée à l'intérieur dudit tambour 40.

Un tel agencement est particulièrement simple et compact.

Il permet notamment à la grille réceptrice 10 d'aborder progressivement la lisière de l'écoulement F1, par abord tangent, et de générer le flux d'aspiration F14 au plus près de l'écoulement F1, pour une meilleure efficacité énergétique.

Le mouvement de convoyage M10 correspondra alors à une rotation, autour de l'axe central Y40 du tambour 40.

Cette rotation sera de préférence orientée à rebours par rapport au sens d'écoulement que présente l'écoulement F1 de mélange 1 en vis-à-vis du poste de tri 11, tel que cela est illustré sur la figure 1. Dans le cas d'un écoulement F1 vertical et d'une buse d'aspiration 14 horizontale, cela permet de maintenir les fibres 2, après leur capture par aspiration, contre la face externe 10A, par simple gravité, puisque la portion de la face externe 10A qui relie le poste de tri 11 au poste d'évacuation 12 forme alors la face supérieure, en l'espèce le demi-cylindre supérieur, du tambour 40.

Le diamètre du tambour 40, et donc le diamètre extérieur de la grille réceptrice 10, sera de préférence supérieur ou égal à 80 mm, et par exemple compris entre 80 mm et 1 m.

La vitesse de rotation pourra être choisie de sorte à produire une vitesse linéaire tangentielle comprise entre 5 cm/s et 1 m/s afin d'acheminer les fibres 2 vers le poste d'évacuation 12 à un rythme suffisamment soutenu pour éviter un colmatage local et donc une perte sensible d'aspiration au niveau du poste de tri 11, et néanmoins suffisamment modéré pour ne pas éjecter les fibres 2 capturées sous l'effet de la force centrifuge.

De préférence, la buse d'aspiration 14 forme une fente parallèle à l'axe central Y40 du tambour 40, et dont l'ouverture présente une largeur, transversalement par rapport à l'axe central Y40 du tambour 40, comprise entre 1 mm et 5 cm, de préférence entre 1 mm et 1 cm, et de préférence encore entre 2 mm et 10 mm. La largeur d'ouverture peut être choisie d'autant plus grande que l'aspiration est puissante. L'ouverture peut notamment couvrir un secteur angulaire A14, considéré en azimut autour dudit axe central Y40, et dit « secteur angulaire aspirant » A14, dont l'étendue est inférieure ou égale à 15 degrés, par exemple comprise entre 0,1 degré et 10 degrés.

La finesse de la buse d'aspiration 14 permet avantageusement de conférer puissance, débit élevé, et précision directionnelle au flux d'aspiration F14.

A titre indicatif, la distance radiale qui sépare l'ouverture de la buse d'aspiration 14 de la face interne 10B de la grille réceptrice 10 est inférieure ou égale à 5 mm.

De préférence, le secteur angulaire aspirant A14 contient, et plus préférentiellement est centré sur, le rayon qui est issu de l'axe central Y40 du tambour 40 et qui est perpendiculaire à la direction principale d'écoulement Z1.

Ainsi, la fente de la buse d'aspiration 14, et plus globalement le poste de tri 11, seront situés dans le secteur du tambour 40 qui est situé au plus près de l'écoulement F1, et sensiblement tangent à la direction principale d'écoulement Z1.

De préférence, la buse de soufflage 16 du poste d'évacuation 12 pourra être, elle aussi, logée à l'intérieur du tambour 40, à une distance azimutale de la buse d'aspiration 14 qui est supérieure ou égale à 90 degrés, à 120 degrés, voire à 150 degrés.

Ainsi, la buse d'aspiration 14 et la buse de soufflage 16 seront situées dans des positions sensiblement opposées diamétralement au sein du tambour 40, de sorte que le flux de soufflage F16 n'interfère pas avec le flux d'aspiration F14.

De même, cet éloignement permet d'éviter que les fibres 2 en cours de traitement par le poste d'évacuation 12, ici chassées de la grille réceptrice 10 pour être projetées vers l'aspirateur 15, n'interfèrent pas avec l'écoulement F1.

De surcroît, le flux de soufflage F16 chassant radialement les fibres au niveau d'une portion de la paroi du tambour 40 qui est en forte pente, voire tangente à la verticale, on évite que lesdites fibres 2 ne se redéposent sur la face externe 10A de la grille réceptrice 10.

La fente de la buse de soufflage 16 s'étend de préférence sur au moins 50%, 75%, 90%, voire sur 100% de la largeur W10 de la grille réceptrice 10, et de préférence parallèlement à l'axe central Y40 du tambour 40.

De préférence, l'ouverture de la buse de soufflage 16 présente une largeur, transversalement par rapport à l'axe central Y40 du tambour 40, comprise entre 1 mm et 5 cm, de préférence entre 1 mm et 1 cm, et de préférence encore entre 2 mm et 10 mm. La largeur de l'ouverture peut être choisie d'autant plus grande que l'aspiration est puissante. L'étendue du secteur angulaire couvert par l'ouverture de la buse de soufflage 16 sera de préférence inférieure ou égale à 15 degrés, et par exemple comprise entre 0,1 degrés et 10 degrés, pour conférer puissance et précision au flux de soufflage, sous forme d'un jet de fine épaisseur.

De préférence, l'axe central Y40 du tambour 40 forme avec l'horizontale un angle inférieur à 30 degrés, de préférence inférieur à 20 degrés, inférieur à 10 degrés, inférieur à 3 degrés, voire préférentiellement égal à zéro degré.

Le tambour 40, et donc la fente de la buse d'aspiration 14, s'étend donc sensiblement voire exactement à l'horizontale, occupant ainsi une largeur maximale par rapport à l'écoulement F 1.

Ceci permet également à la portion supérieure de la paroi du tambour 40 de soutenir efficacement les fibres 2 qui ont été capturées par aspiration au poste de tri 11.

Ainsi en définitive, la grille réceptrice 10 formera de préférence un tambour rotatif horizontal de base circulaire, dont un premier tronçon circonférentiel, tangent à la verticale, est affecté au poste de tri 11, un second tronçon circonférentiel, ici le tronçon supérieur, assure le convoyage du poste de tri 11 au poste d'évacuation 12, et un troisième tronçon circonférentiel, tangent à la verticale et opposé diamétralement au premier tronçon, est affecté au poste d'évacuation 12.

Selon une possibilité d'agencement, la face externe 10A de la grille réceptrice 10 comprend des reliefs, de préférence formés par des barrettes disposées transversalement, de préférence perpendiculairement, à la direction du mouvement de convoyage M10, afin de favoriser le maintien des fibres 2 sur la face externe 10A de la grille réceptrice 10 et le convoyage desdites fibres 2 jusqu'au poste d'évacuation 12.

La face externe 10A sera ainsi pourvue de godets qui permettent de transmettre aux fibres le mouvement de convoyage M10, même après que la portion correspondante de la grille réceptrice 10, et donc les fibres 2 concernées, ont quitté l'emplacement du poste de tri 11, et donc le champ d'influence du flux d'aspiration F14 qui avait initialement amené, et temporairement maintenu par dépression, lesdites fibres 2 contre la face externe 10A de la grille réceptrice 10.

Les collecteurs 13, 20, 30 mentionnés dans ce qui précède pourront être formés par tout système approprié, tel que sac en tissu poreux, panier à mailles fines, etc.

Bien entendu, l'invention n'est nullement limitée aux seuls exemples de réalisation décrits dans ce qui précède, l'homme du métier étant notamment à même d'isoler ou de combiner librement entre elles l'une ou l'autre des caractéristiques susmentionnées, ou de leur substituer des équivalents.

## Revendications

1. Installation (100) de séparation destinée à traiter un mélange (1) de composants (2, 3) comprenant une première famille de composants (2) formés par des fibres (2) et une seconde famille de composants (3) formés par des granules (3), ladite installation (100) étant **caractérisée en ce qu'**elle comprend :
- un dispositif d'émiettement (101) conçu pour fractionner le mélange (1) et générer un écoulement (F1) dudit mélange, sous une forme pulvérulente contenant des fibres (2) et des granules (3), selon une direction dite « direction principale d'écoulement » (Z1),
- ainsi qu'une grille (10) dite « grille réceptrice » (10), qui présente une première face (10A) dite « face externe » (10A) et une seconde face (10B) opposée, dite « face interne » (10B), laquelle grille réceptrice (10) est agencée pour être entraînée en déplacement selon un mouvement dit « mouvement de convoyage » (M10) qui permet à ladite grille réceptrice de passer d'un premier poste, dit « poste de tri » (11), au niveau duquel la face externe (10A) de la grille réceptrice (10) se situe en vis-à-vis de l'écoulement (F1) du mélange afin de capter des fibres (2) en provenance de l'écoulement (F1) du mélange, à un second poste dit « poste d'évacuation » (12), qui est distant du poste de tri (11), et au niveau duquel les fibres (2) sont détachées de ladite face externe (10A) de la grille réceptrice (10) pour pouvoir rejoindre un premier collecteur (13),
le poste de tri (11) étant pourvu d'une buse d'aspiration (14) qui est située en vis-à-vis de la face interne (10B) de la grille réceptrice (10) et qui est conçue pour générer, à travers la grille réceptrice (10), un flux d'aspiration (F14) qui est transverse à la direction principale d'écoulement (Z1) du mélange (1), de sorte que ledit flux d'aspiration (F14) permet de prélever des fibres (2) dans l'écoulement (F1) du mélange, en déviant la trajectoire desdites fibres (2) par rapport à la direction principale d'écoulement (Z1) du mélange, et de plaquer lesdites fibres (2) contre la face externe (10A) de la grille réceptrice (10).

2. Installation selon la revendication 1 **caractérisée en ce que** la grille réceptrice (10) et la buse d'aspiration (14) du poste de tri (11) sont agencées de sorte que le flux d'aspiration (F14) puisse également prélever dans l'écoulement (F1) du mélange, en même temps que les fibres (2), certains granules (3), dits « granules fins » (3_1), entraîner lesdits granules fins (3_1) jusqu'à la grille réceptrice (10), puis faire passer lesdits granules fins (3_1) à travers la grille réceptrice (10) tandis que ladite grille réceptrice (10) retient les fibres sur sa face externe (10A), et évacuer lesdits granules fins (3_1) vers un second collecteur (20).

3. Installation selon la revendication 1 ou 2 **caractérisée en ce que** le dispositif d'émiettement (101) est agencé pour générer un écoulement (F1) de mélange vertical descendant, sous forme d'une pluie de fibres (2) et de granules (3) qui tombe par gravité, **en ce que** le poste de tri (11) se situe à une altitude inférieure à celle du dispositif d'émiettement (101), et présente la face externe (10A) de la grille réceptrice (10) au bord de l'écoulement (F1), de façon sensiblement tangente à la direction principale d'écoulement (Z1) du mélange, et **en ce que** l'installation comprend un troisième collecteur (30), situé à l'aplomb vertical de l'écoulement (F1) du matériau, à une altitude inférieure à celle du poste de tri (11), de sorte à pouvoir collecter notamment les granules, dits « granules grossiers » (3_2), qui ne sont pas captés par le flux d'aspiration (F14) au niveau du poste de tri (11).

4. Installation selon l'une selon des revendications précédentes **caractérisée en ce que** le poste d'évacuation (12) comprend une buse de soufflage (16), placée en vis-à-vis de la face interne (10B) de la grille réceptrice (10), et agencée pour créer un flux de soufflage (F16) qui traverse la grille réceptrice (10), depuis la face interne (10B) jusqu'à la face externe (10A), afin de détacher et chasser les fibres (2) accumulées sur la face externe (10A).

5. Installation selon l'une selon des revendications précédentes **caractérisée en ce que** la grille réceptrice (10) forme la paroi latérale d'un tambour (40) cylindrique qui est monté en rotation autour de son axe central (Y40), et **en ce que** la buse d'aspiration (14) est logée à l'intérieur dudit tambour (40).

6. Installation selon la revendication 5 **caractérisée en ce que** la buse d'aspiration (14) forme une fente parallèle à l'axe central (Y40) du tambour, et dont l'ouverture présente une largeur, transversalement par rapport à l'axe central (Y40) du tambour (40), comprise entre 1 mm et 5 cm, de préférence entre 1 mm et 1 cm, et de préférence encore entre 2 mm et 10 mm.

7. Installation selon la revendication 4 et l'une des revendications 5 ou 6 **caractérisée en ce que** la buse de soufflage (16) est logée à l'intérieur du tambour (40), à une distance azimutale de la buse d'aspiration (14) qui est supérieure ou égale à 90 degrés, à 120 degrés, voire à 150 degrés.

8. Installation selon l'une selon des revendications 5 à 7 **caractérisée en ce que** l'axe central (Y40) du tambour (40) forme avec l'horizontale un angle inférieur à 30 degrés, de préférence inférieur à 20 degrés, inférieur à 10 degrés, inférieur à 3 degrés, voire préférentiellement égal à zéro degré.

9. Installation selon l'une selon des revendications précédentes **caractérisée en ce que** la face externe (10A) de la grille réceptrice (10) comprend des reliefs, de préférence formés par des barrettes disposées transversalement, de préférence perpendiculairement, à la direction du mouvement de convoyage (M10), afin de favoriser le maintien des fibres (2) sur la face externe (10A) de la grille réceptrice et le convoyage desdites fibres (2) jusqu'au poste d'évacuation (12).

10. Installation selon l'une selon des revendications précédentes **caractérisée en ce que** le dispositif d'émiettement comprend une brosse (4) et un tamis (5), dit « tamis d'émiettement » (5), qui sont en mouvement relatif dit « mouvement de brossage » (M4) l'un par rapport à l'autre, de sorte que la brosse (4) frotte le mélange (1) à l'encontre du tamis d'émiettement (5) pour désenchevêtrer les fibres (2) et dissocier les uns des autres les composants (2, 3) du mélange, et générer ainsi, à travers le tamis d'émiettement (5), une pluie de fibres (2) et de granules (3) dissociés.
